# EUROPÄISCHE PATENTSCHRIFT

(11) **EP 0 725 090 B1**
(45) Veröffentlichungstag und Bekanntmachung des Hinweises auf die Patenterteilung: **07.06.2000**
(21) Anmeldenummer: 96100034.6
(22) Anmeldetag: 03.01.1996
(51) Int. Cl.: C08F 255/02

(54) **Verfahren zur Herstellung von hochviskosen Polypropylen-Pfropfcopolymeren**
Process for the preparation of high viscosity polypropylene graft copolymers
Procédé de préparation de polymères greffés de polypropylène à haute viscosité

(30) Priorität: 10.01.1995 DE 19500426
(43) Veröffentlichungstag der Anmeldung: 07.08.1996
(73) Patentinhaber: Borealis GmbH, 2323 Schwechat-Mannswörth (AT)
(72) Erfinder: Bühler, Konrad, Dr., D-06618 Pödelist (DE); Gebauer, Manfred, Dr., D-06124 Halle (DE)
(74) Vertreter: Schinke, Herbert, Dr. Dr., Patentanwaltskanzlei

(56) Entgegenhaltungen:
- EP-A- 0 177 401
- EP-A- 0 412 787
- EP-A- 0 461 881
- EP-A- 0 485 983
- DE-A- 4 022 569
- US-A- 4 382 128

## Beschreibung

Die Erfindung betrifft ein Verfahren zur Herstellung von hochviskosen Polypropylen-Pfropfcopolymeren, die als Legierungskomponenten, Formmassen und Beschichtungsmassen eingesetzt werden können.

Die Pfropfung von Säure- bzw. Säureanhydrid-Gruppen enthaltender Monomerer wie Acrylsäure, Methacrylsäure, Maleinsäureanhydrid oder Fumarsäureanhydrid auf Polypropylen bzw. Propylen-Copolymere im Extruder in Gegenwart von Peroxiden ist bekannt (EP 0 370 735; JP 05 170 988; JP 05 170 987; DE 40 22 569; EP 0 485 983; EP 0 443 346; Lambla, M., Makromol. Chem., Macromol. Symp. 75 (1993), 137 -157; Khunova, V., Polym.-Plast. Technol. Eng. 32 (1993)4, 289 - 298; Fritz, H., Polymerwerkstoffe Merseburg 1994, 23 - 32 ).

Bekannt ist ebenfalls die Pfropfung von Polypropylen mit Acrylsäureestern wie Glycidylmethacrylat und t-Butylaminoethylmethacrylat (Baker, W., Polymer 34 (1993)22, 4680 - 4687; Kotlar, H., Antec 1993, 1240- 1248) sowie mit 2-lsopropenyl-2-oxazolen (Baker, W., Polymer 35(1994)5, 988 - 994) in der Schmelze.

Das Problem der Schmelzepfropfung von Polypropylen in Gegenwart von Peroxiden besteht darin, dass simultan zur Pfropfung ein Kettenabbau des Polypropylens erfolgt (Kazmierczak, R., Antec'93, 2539 - 2543; Khunova, V., Polym.-Plast. Technol. Eng. 32(1993)4, 289 - 298; Fritz, H., Polymerwerkstoffe Merseburg 1994, 23 - 32). Dieser mit einer Herabsetzung der Schmelzviskosität verbundene Kettenabbau ist für den Einsatz der Produkte als Legierungskomponenten, Formmassen und Beschichtungsmassen von Nachteil, da Festigkeit und Modul ebenfalls absinken.

Bekannt ist, den Nachteil des Kettenabbaus bei der Schmelzepfropfung von Polypropylen durch Festphasenpfropfung (Khunova, V., Polym. -Plast. Technol. Eng. 32 (1993)4, 289 - 298) oder durch Pfropfung in Lösung (Devi, S., J. appl. Polym. Sci. 53(1994), 239 - 245; EP 0 177 401) zu umgehen. Problematisch bei diesen Verfahren ist jedoch der hohe technologische Aufwand der Lösungsmittelabtrennung bei der Pfropfung in Lösung sowie die sehr breite Pfropfgradverteilung bei der Festphasen-Pulverpfropfung von Polypropylen.

Eine weitere bekannte Variante der Einschränkung des Kettenabbaus bei der Pfropfung von Polypropylen mit ungesättigten Säuren bzw. ungesättigten Säurederivaten besteht darin, bei einer zweistufigen Reaktionsführung Radikalbildner mit unterschiedlichen Zersetzungstemperaturen einzusetzen, wobei die erste Verfahrensstufe in fester Phase und die zweite Verfahrensstufe in der Schmelze (Extruder) durchgeführt wird (EP 0 461 881). Von Nachteil ist jedoch der hohe technologische Aufwand für zwei getrennte Reaktionsstufen bei der Pfropfung.

Bekannt ist ebenfalls, mit ungesättigten Säureanhydriden gepfropfte Polypropylene mit gesättigten bifunktionellen Verbindungen wie Polyhydroxyverbindungen umzusetzen (US 4 382 128; EP 0 177 401).

Der Erfindung liegt daher das Problem zugrunde, bei der Schmelzepfropfung von Polypropylen im Extruder durch geeignete Maßnahmen hochviskose Pfropfcopolymere zu erzielen, die für einen Einsatz als Legierungskomponenten, Formmassen und Beschichtungsmassen geeignet sind.

Das Problem wurde durch ein einstufiges Verfahren zur Herstellung von hochviskosen Polypropylen-Pfropfcopolymeren gelöst, bei dem Polypropylene mit Schmelzindices im Bereich von 0,1 bis 5 g/10 min bei 230°C/21,19 N mit radikalisch polymerisierbaren Monomeren in Anteilen von 1 bis 25%, bezogen auf Polypropylen, im Extruder in Gegenwart von 0,05 bis 1 Masse% Peroxiden umgesetzt werden, wobei erfindungsgemäss der Reaktionsmischung als weitere Komponenten 0,1 bis 3 Masse% polyfunktionelle Monomere und/oder 1 bis 45 Masse% Polymere mit funktionellen Gruppen zugesetzt werden.

Die bei diesem einstufigen Verfahren als radikalisch polymerisierbare Monomere eingesetzten Monomere sind bevorzugt ungesättigte Säureanhydride, ungesättigte Carbonsäuren, Acrylsäure- und Methacrylsäureester, Acrylnitril, Glycidylacrylat, Glycidylmethacrylat, Styrol, α-Methylstyrol, Vinylacetat, Vinylbutyrat, Methylvinylketon, Vinylcarbazol, Vinylpyridin, Vinylalkoxysilane, lsopropenyl-2-isoxalin, Vinylpyrrolidon oder Mischungen dieser Monomerer. Sie werden bei der Herstellung der erfindungsgemässen hochviskosen Polypropylen-Pfropfcopolymeren in Anteilen von 1 bis 25 Masse%, bezogen auf Polypropylen, eingesetzt.

Als ungesättigte Säureanhydride werden bei dem erfindungsgemässen einstufigen Verfahren Maleinsäureanhydrid, Fumarsäureanhydrid und/oder Itakonsäureanhydrid bevorzugt eingesetzt.

Die ungesättigten Carbonsäuren bei dem erfindungsgemässen einstufigen Verfahren sind insbesondere Acrylsäure und/oder Methacrylsäure.

Die bei dem einstufigen Verfahren eingesetzten Peroxide sind vorzugsweise Di-t-butylperoxid, t-Butylperbenzoat, Dicumylperoxid, 2,5-Dimethyl-2,5-di-(t-butylperoxyisopropyl)benzol, 2,5-Dimethyl-2,5-di-(t-butylperoxy)hexan, 2,5-Dimethyl-2,5-di-(t-butylperoxy)hexyne-3, 2,5-Dimethyl-2,5-di-(t-amylperoxy)hexan und/ oder 1,3-Bis-(t-butylperoxyisopropyl)benzol. Bei der Pfropfung kommen diese Peroxide in Anteilen von 0,05 bis 1 Masse% zum Einsatz.

Als polyfunktionelle Monomere kommen bei dem erfindungsgemässen einstufigen Verfahren bevorzugt Adipinsäurediallylester, Maleinsäurediallylester, Pentaerythritoltriacrylat, Allylacrylat, Divinylbenzol, Trivinylbenzol, Hexamethylentetramin, p-Toloylendiamin, Ethylenglykol, Propylenglykol, Phthalsäureanhydrid, Pyromellithsäureanhydrid und/oder Bisphenol-A-diglycidether in Anteilen von 0,1 bis 3 Masse%, bezogen auf Polypropylen, zum Einsatz .

Als Polymere mit funktionellen Gruppen kommen bei dem einstufigen Verfahren bevorzugt Polyolefine, Olefin-Copolymere und Polyolefinwachse mit Säure-, Säureanhydrid-, Isocyanat-, Epoxid-, Oxazolin-, Amino- oder Hydroxygruppen und/oder Polyamide, Polyamine, Polyester, Polyether und/oder Polyurethane zum Einsatz. Der Anteil der eingesetzten Polymeren mit funktionellen Gruppen liegt im Bereich von 1 bis 45 Masse%, bezogen auf das eingesetzte Polypropylen.

### Ausführungsbeispiele

### Beispiel 1 (Vergleichsbeispiel)

In einen Doppelschneckenextruder Werner und Pfleiderer ZSK 53, L/D=42, mit Vakuumentgasung und Unterwassergranulierung, Temperaturprofil 170/205/185/ 170/210/170/160°C, wird ein Polypropylen-Homopolymer (Schmelzindex 0,5 g/10 min bei 230°C/21,19 N) mit 25 kg/h dosiert. In die Schmelze werden in Zone 3 eine 50%ige Lösung von Glycidylmethacrylat in Aceton mit 5,2 l/h und eine 25%ige Lösung von Di-t-butylperoxid mit 0,26 l/h eingespritzt. Das ausgetragene modifizierte Granulat besitzt einen Gehalt an gepfropftem Glycidylmethacrylat von 7,6 Masse% und einen Schmelzindex von 82 g/10 min bei 230°C/21,19 N.

### Beispiel 2

In einen Doppelschneckenextruder nach Beispiel 1 wird ein Polypropylen-Homopolymer (Schmelzindex 0,5g/10 min bei 230°C/21,19 N) mit 25 kg/h dosiert. In die Schmelze wird eine 50%ige Lösung eines Gemischs aus Glycidylmethacrylat und Pentaerythritoltriacrylat im Verhältnis 9:1 mit 5,2 l/h und eine 25%ige Lösung von Di-t-butylperoxid mit 0,26 l/h eingespritzt. Das ausgetragene modifizierte Granulat besitzt einen Gehalt an gepfropftem Glycidylmethacrylat von 7,2 Masse% und einen Schmelzindex von 3,2 g/10 min bei 230°C/21,19 N.

### Beispiel 3

In einen Doppelschneckenextruder nach Beispiel 1 wird ein Propylen-Ethylen-Copolymer (Schmelzindex 1,2g/10 min bei 230°C/21,19 N) mit 18 kg/h dosiert. In die Schmelze wird in Zone 3 eine Mischung aus gleichen Masseanteilen von Aceton, Styrol und Maleinsäureanhydrid mit 4,9 l/h und eine 25% Lösung von 2,5-Dimethyl-2,5-di-(t-butylperoxy)hexan mit 0,62 l/h eingespritzt. In Zone 6 wird eine 30% Lösung von p-Toloylendiamin in Aceton mit 0,18 l/h dosiert.
Das ausgetragene modifizierte Granulat besitzt einen Gehalt an aufgepfropftem Maleinsäureanhydrid von 4,8 Masse% und einen Schmelzindex von 2,9 g/10 min bei 230°C/21,19 N.

### Beispiel 4

In einen Doppelschneckenextruder nach Beispiel 1, Temperaturprofil 180/210/190/ 210/240/240/200°C, wird ein Polypropylen-Homopolymer (Schmelzindex 1,5 g/10 min bei 230°C/21,19 N) mit 22,5 kg/h dosiert. In die Schmelze wird in Zone 3 t-Butylacrylat mit 0,5 l/h und eine 10% Lösung von 1,3-Bis(t-butylperoxyisopropyl)benzol mit 0,72 l/h eingespritzt. Über einen Seitenstrangextruder wird in Zone 6 mit 1,4 kg/h Polyamid-6,36 (Schmelzindex 12,9 g/10 min bei 190°C/21,19 N) dosiert. Das ausgetragene modifizierte Granulat besitzt einen Schmelzindex von 4,2 g/10 min bei 230°C/21,19 N.

### Beispiel 5

In einen Doppelschneckenextruder nach Beispiel 1, Temperaturprofil 180/210/190/ 220/260/290/230°C, wird ein Polypropylen-Homopolymer (Schmelzindex 0,5 g/10 min bei 230°C/21,19 N) mit 32 kg/h dosiert. In die Schmelze (Zone 3) wird eine 40% Lösung von Itakonsäureanhydrid mit 0,18 l/h und eine 10% Lösung von 2,5-Dimethyl-2,5-bis(t-butylperoxyisopropyl)benzol mit 0,32 l/h eingespritzt Über einen Seitenstrangextruder wird in die Zone 6 mit 11,2 kg/h Poly-2,6-dimethylphenylenoxid (Schmelztemperatur 262°C) dosiert.
Das ausgetragene modifizierte Granulat besitzt einen Schmelzindex von 1,5 g/10 min bei 230°C/21,19 N.

## Patentansprüche

1. Einstufiges Verfahren zur Herstellung von hochviskosen Polypropylen-Pfropfcopolymeren durch Umsetzung von Polypropylen mit Schmelzindices im Bereich von 0,1 bis 5 g/10 min bei 230°C/21,19 N mit radikalisch polymerisierbaren Monomeren in Anteilen von 1 bis 25%, bezogen auf Polypropylen, im Extruder in Gegenwart von 0,05 bis 1 Masse% Peroxiden, dadurch gekennzeichnet, dass der Reaktionsmischung als weitere Komponenten 0,1 bis 3 Masse% polyfunktionelle Monomere und/oder 1 bis 45 Masse% Polymere mit funktionellen Gruppen zugesetzt werden.

2. Einstufiges Verfahren nach Anspruch 1, dadurch gekennzeichnet, dass als radikalisch polymerisierbare Monomere ungesättigte Säureanhydride, ungesättigte Carbonsäuren, Acrylsäure- und Methacrylsäureester, Acrylnitril, Glycidylacrylat, Glycidylmethacrylat, Styrol, α-Methylstyrol, Vinylacetat, Vinylbutyrat, Methylvinylketon, Vinylcarbazol, Vinylpyridin, Vinylalkoxysilane, lsopropenyl-2-isoxalin, Vinylpyrrolidon oder Mischungen dieser Monomerer eingesetzt werden.

3. Einstufiges Verfahren nach Anspruch 1 und 2, dadurch gekennzeichnet, dass als ungesättigte Säureanhydride Maleinsäureanhydrid, Fumarsäureanhydrid und/oder Itakonsäureanhydrid eingesetzt werden.

4. Einstufiges Verfahren nach Anspruch 1 und 2, dadurch gekennzeichnet, dass als ungesättigte Carbonsäuren Acrylsäure und/oder Methacrylsäure eingesetzt werden.

5. Einstufiges Verfahren nach einem oder mehreren der Ansprüche 1 bis 4, dadurch gekennzeichnet, dass als Peroxide Di-t-butylperoxid, t-Butylperbenzoat, Dicumylperoxid, 2,5-Dimethyl-2,5-di-(t-butylperoxyisopropyl)benzen, 2,5-Dimethyl-2,5-di-(t-butylperoxy)hexan, 2,5-Dimethyl-2,5-di-(t-butylperoxy)hexyne-3, 2,5-Dimethyl-2,5-di-(t-amylperoxy)hexan und/oder 1,3-Bis(t-butylperoxyisopropyl)benzen eingesetzt werden.

6. Einstufiges Verfahren nach einem oder mehreren der Ansprüche 1 bis 5, dadurch gekennzeichnet, dass als polyfunktionelle Monomere Adipinsäurediallylester, Maleinsäurediallylester, Pentaerythritoltriacrylat, Allylacrylat, Divinylbenzol, Trivinylbenzol, Hexamethylentetramin, p-Toloylendiamin, Ethylenglycol, Propylenglycol, Phthalsäureanhydrid, Pyromellithsäureanhydrid und/oder Bisphenol-A-diglycidether eingesetzt werden.

7. Einstufiges Verfahren nach einem oder mehreren der Ansprüche 1 bis 6, dadurch gekennzeichnet, dass als Polymere mit funktionellen Gruppen Polyolefine, Olefin-Copolymere und Polyolefinwachse mit Säure-, Säureanhydrid-, Isocyanat-, Epoxid-, Oxazolin-, Amino- oder Hydroxygruppen und/oder Polyamide, Polyamine, Polyester, Polyether und/oder Polyurethane zugesetzt werden.

## Claims

1. Single-stage process for the preparation of high viscosity polypropylene graft copolymers, in a reaction of polypropylenes having melt-flow indexes from 0.1 to 5 g / 10 minutes, at 230 °C / 21.19 N, with radically polymerizable monomers, in concentrations from 1 % to 25 % of the polypropylene content, in an extruder in the presence of peroxides in concentrations from 0.05 % to 1 % by weight, CHARACTERIZED IN THAT polyactive monomers in concentrations from 0.1 % to 3 % by weight and/or polymers with active groups in concentrations from 1 % to 45 % by weight are added to the reaction mixture, as additional components.

2. Single-stage process according to Claim 1, CHARACTERIZED IN THAT unsaturated acid anhydrides, unsaturated carboxylic acids, acrylic and methacrylic acid esters, acrylonitrile, glycidyl acrylate, glycidyl methacrylate, styrene, α-methyl styrene, vinyl acetate, vinyl butyrate, methyl vinyl ketone, vinyl carbazol, vinyl pyridine, vinyl alkoxysilane, iso-propenyl-2-isoxaline, vinyl pyrrolidone, or mixtures of theses monomers are added as radically polymerizable monomers.

3. Single-stage process according to Claim 1 & 2, CHARACTERIZED IN THAT maleic anhydride, fumaric anhydride and/or itaconic anhydride are employed in their capacity as unsaturated acid anhydrides.

4. Single-stage process according to Claim 1 & 2, CHARACTERIZED IN THAT acrylic acid and/or methacrylic acid are employed in their capacity as carboxylic acids.

5. Single-stage process according to one or more out of Claims 1 through to and including 4, CHARACTERIZED IN THAT di-t-butylperoxide, t-butylperbenzoate, dicumylperoxide, 2,5-dimethyl-2,5-di-(t-butylperoxy)hexane, 2,5-dimethyl-2,5-di-(t-butylperoxy)hexyne-3, 2,5-dimethyl-2,5-di-(t-amylperoxy)hexane and/or 1,3-bis(t-butylperoxyisopropyl)benzene are employed in their capacity as peroxides.

6. Single-stage process according to one or more out of Claims 1 through to and including 5, CHARACTERIZED IN THAT diallyl ester of adipic acid and/or maleic acid as well as pentaerythritol triacrylate, allyl acrylate, divinyl benzene, trivinyl benzene, hexamethylene tetramine, p-toluylene diamine, ethylene glycol, propylene glycol, phthalic anhydride, pyromellitic anhydride and/or bisphenol-A-diglycide ether are employed in their capacity as polyactive monomers.

7. Single-stage process according to one or more out of Claims 1 through to and including 6, CHARACTERIZED IN THAT polyolefins, olefin copolymers and polyolefin waxes with active groups such as acid, acid anhydride, isocyanate, epoxide, oxazoline, amino or hydroxyl groups and/or polyamides, polyamines, polyesters, polyethers and/or polyurethanes are added as polymers with active groups.

## Revendications

1. Procédé de préparation en une étape de copolymères greffés de polypropylène à haute viscosité en transformant du polypropylène avec des indices de fusion de l'ordre de 0,1 à 5g/10 min à 230°C/21,19 N avec des monomères polymérisables radicalement dans des proportions allant de 1 à 25%, en ce qui concerne le polypropylène, dans l'extrudeuse en présence de 0,05 à 1 % de la masse de peroxydes, caractérisé par le fait que 0,1 à 3 % de la masse de monomères polyfonctionnels et/ou 1 à 45 % de la masse de polymères ayant des groupes fonctionnels sont rajoutés au mélange réactionnel en tant que composants supplémentaires.

2. Procédé en une étape selon la revendication 1, caractérisé par le fait que des anhydrides d'acide insaturés, des acides de carbone insaturés, des esters d'acide acrylique et des esters d'acide méthacrylique, de l'acrylonitrile, du glycidylacrylate, du glycidylméthacrylate, du styrène, du α-styrène méthylique, de l'acétate de vinyle, du butyrate de vinyle, de la cétone de méthylvinyle, du carbazole de vinyle, de la pyridine de vinyle, de l'alcoxysilane de vinyle, de l'isoxaline d'isopropényle 2, de la pyrrolidine de vinyle ou des mélanges de ces monomères peuvent être employés comme monomères polymérisables radicalement.

3. Prccédé en une étape selon la revendication 1 et 2, caractérisé par le fait que de l'anhydride d'acide maléique, de l'anhydride d'acide fumarique et/ou de l'anhydride d'acide itaconique peuvent être employés comme anhydrides d'acide insaturés.

4. Procédé en une étape selon la revendication 1 et 2, caractérisé par le fait que de l'acide acrylique et/ou de l'acide méthacrylique peuvent être employés comme acides de carbone insaturés.

5. Procédé en une étape selon l'une ou plusieurs des revendications 1 à 4, caractérisé par le fait que du di-t-butylperoxyde, du t-butylperbenzoate, du dicumylperoxyde, du 2,5-diméthyl-2,5-di-(t-butylperoxyisopropyl)benzène, du 2,5-diméthyl-2,5-di-(t-butylperoxy)hexane, du 2,5-diméthyl-2,5-di-(t-butylperoxy)-hexyne-3, du 2,5-diméthyl-2,5-di-(t-amylperoxy)hexane et/ou du 1,3-(t-butylperoxyisopropyl)benzène bis peuvent être employés comme peroxydes.

6. Procédé en une étape selon l'une ou plusieurs revendications 1 à 5, caractérisé par le fait que des esters diallyle d'acide adipique, des esters diallyle d'acide maléique, du triacrylate de pentaérythritol, de l'allylacrylate, du benzol de divinyle, du benzol de trivinyle, de l'hexaméthylènetétramine, de la p-toluènediamine, de l'éthylèneglycol, du propylèneglycol, de l'anhydride d'acide phtalique, de l'anhydride d'acide pyromellitique et/ou des diglycidéthers de bisphénol A peuvent être employés comme monomères polyfonctionnels.

7. Procédé en une étape selon l'une ou plusieurs des revendications 1 à 6, caractérisé par le fait que des polyoléfines, des copolymères d'oléfine et des cires de polyoléfine ayant des groupes acide, anhydride d'acide, isocyanate, époxyde, oxazoline, amine, ou hydroxyde et/ou des polyamides, des polyamines, des polyesters, des polyéthers et/ou des polyuréthanes sont rajoutés comme polymères ayant des groupes fonctionnels.
